# EUROPEAN PATENT APPLICATION

(11) **EP 4 817 729 A1**
(43) Date of publication of application: **07.10.2026**
(21) Application number: 24924608.3
(22) Date of filing: 26.12.2024
(51) Int. Cl.: B01J 8/02, B01J 8/06

(54) **MOVING DEVICE AND MOVEMENT METHOD**

(30) Priority: 14.02.2024 JP 2024020641
(71) Applicant: Nippon Shokubai Co., Ltd., Osaka-shi, Osaka 541-0043 (JP)
(72) Inventor: NISHIGUCHI, Toshiya, Himeji-shi, Hyogo 671-1282 (JP); MAEHARA, Takeshi, Himeji-shi, Hyogo 671-1282 (JP)
(74) Representative: Haseltine Lake Kempner LLP
(86) International application number: PCT/JP2024/046098
(87) International publication number: WO 2025/173405

(57) **Abstract**

The present disclosure provides a moving device having a simpler configuration, and a movement method. A moving device 300 moves on a tube sheet of a multi-tubular reactor. The moving device 300 includes: an insertion member insertion-retraction module configured to insert and retract a plurality of insertion members respectively into and from different reaction tubes; a cart module 310 including a rotary body 311 that is in contact with the tube sheet and is movable in a first direction on the tube sheet; and a first slide module connected to the cart module 310 in such a manner that the cart module 310 is slidable in the first direction. The insertion member insertion-retraction module is directly or indirectly connected to the cart module. This solves the above problems.

## Description

### Technical Field

The present invention relates to a moving device movable inside a multi-tubular reactor and a movement method using the moving device.

### Background Art

In the field of the petrochemical industry, many catalytic reactions such as a decomposition reaction, a reforming reaction, an oxidation reaction, an ammoxidation reaction, and a reduction reaction of hydrocarbons using a multi-tubular reactor have been performed. In the multi-tubular reactor, a tube sheet and thousands to tens of thousands of reaction tubes connected to the tube sheet are disposed, and solid such as catalyst or granular metallic Raschig ring (hereinafter, referred to as catalyst or other solid) is filled in the reaction tubes.

Since the performance of the catalyst or other solid filled in the reaction tubes degrades due to aging, it is necessary to regularly remove and replace the solid. This operation such as catalyst replacement can be performed by an operator entering the inside of the multi-tubular reactor, for example. However, a large number of operators are required for removal of catalyst with degraded performance, washing of reaction tubes from which the catalyst has been removed, filling of new catalyst, measurement of a pressure drop after the filling, and the like, and an enormous amount of time is required.

Openings of thousands to tens of thousands of reaction tubes disposed in the multi-tubular reactor are arranged at regular intervals. Thus, assuming that a process of moving a predetermined distance after the catalyst replacement at a certain position is completed, and performing the catalyst replacement at the next position can be automated, operation efficiency is improved. On the other hand, JP 2002-036151 A discloses an automatic walking device including a lower base having a plurality of legs extendable and retractable in a vertical direction, and an upper base disposed above the lower base and having a plurality of legs extendable and retractable in the vertical direction, in which the automatic walking device is configured to perform a walking motion by an extending/retracting motion of the legs of the lower base, an extending/retracting motion of the legs of the upper base, and a horizontal movement of the upper base and the lower base by a slide mechanism.

### Summary of Invention

However, the tube sheet surface has welding marks of the reaction tubes, and is not a smooth surface but has unevenness. The multi-tubular reactor is often located several meters to several tens of meters above the ground, and the tube sheet surface is not necessarily horizontal and may be slightly inclined. The unevenness and inclination easily cause misalignment in a heavy automatic walking device. In addition, when the catalyst or other solid is placed on the device and transported, the device weight increases, and slight unevenness and inclination cause misalignment. When the automatic walking device is misaligned, the legs and insertion members to be inserted into the reaction tubes cannot be inserted, and thus there is a problem that the device falls over. Even if the device does not fall over, there is still a problem that the device cannot be maintained substantially horizontal, and is inclined instead.

Thus, an object of the present invention is to provide a moving device and a movement method capable of moving a predetermined moving distance even when a tube sheet surface has unevenness or is inclined.

One aspect of the present invention is a moving device that moves on a tube sheet of a multi-tubular reactor, the moving device including an insertion member insertion-retraction module, a cart module, and a first slide module. The insertion member insertion-retraction module inserts and retracts a plurality of insertion members respectively into and from different reaction tubes. The cart module includes a rotary body that is in contact with the tube sheet and is movable in a first direction on the tube sheet. The first slide module is connected to the cart module in such a manner that the cart module is slidable in the first direction. The insertion member insertion-retraction module is directly or indirectly connected to the cart module.

One aspect of the present invention is a movement method in which a combination of steps including the following (1) to (4) is repeated.
(1) A cart module including a rotary body that is in contact with a tube sheet and is movable in a first direction on the tube sheet is arranged at a first position in the first direction.
(2) A plurality of insertion members directly or indirectly connected to the cart module are inserted respectively into different reaction tubes.
(3) The cart module is slid from the first position to a second position in the first direction in a state where the plurality of insertion members are inserted into the different reaction tubes.
(4) After the cart module is fixed at the second position by a fixing mechanism, each of the plurality of insertion members is retracted from a corresponding one of the different reaction tubes.

### Brief Description of Drawings

FIG. 1 is a view illustrating a state where a system for catalyst replacement and the like is introduced into a multi-tubular reactor.
FIG. 2 is a schematic view illustrating a moving device according to an embodiment, the moving device constituting the system for catalyst replacement and the like.
FIG. 3 is a block diagram illustrating a configuration of a control system of an input device constituting the system for catalyst replacement and the like.
FIG. 4 is a plan view illustrating a tube sheet surface of the multi-tubular reactor.
FIG. 5 is a flowchart illustrating moving processing in a first direction by a controller of the moving device constituting the system for catalyst replacement and the like.
FIG. 6 is a view for explaining movement of the moving device in the first direction.
FIG. 7 is a view for explaining movement of the moving device in the first direction.
FIG. 8 is a view for explaining movement of the moving device in the first direction.
FIG. 9 is a view for explaining movement of the moving device in the first direction.
FIG. 10 is a flowchart illustrating moving processing in a second direction by the controller of the moving device constituting the system for catalyst replacement and the like.
FIG. 11 is a view for explaining movement of the moving device in the second direction.
FIG. 12 is a view for explaining movement of the moving device in the second direction.
FIG. 13 is a view for explaining movement of the moving device in the second direction.
FIG. 14 is a view for explaining movement of the moving device in the second direction.
FIG. 15 is a flowchart illustrating moving processing in a third direction by the controller of the moving device constituting the system for catalyst replacement and the like.
FIG. 16 is a view for explaining an operation of an insertion member insertion-retraction mechanism constituting the moving device.
FIG. 17 is a view for explaining the operation of the insertion member insertion-retraction mechanism constituting the moving device.
FIG. 18 is a view for explaining the operation of the insertion member insertion-retraction mechanism constituting the moving device.
FIG. 19 is a view illustrating a state in which operation such as catalyst replacement is performed by the moving device according to a comparative example, the moving device not including an insertion member height adjustment mechanism.
FIG. 20 is a schematic view illustrating a modification of the insertion member insertion-retraction mechanism.
FIG. 21 is a schematic view illustrating the modification of the insertion member insertion-retraction mechanism.
FIG. 22 is a schematic view illustrating the modification of the insertion member insertion-retraction mechanism.
FIG. 23 is a schematic view illustrating the modification of the insertion member insertion-retraction mechanism.
FIG. 24 is a schematic view illustrating the modification of the insertion member insertion-retraction mechanism.

### Description of Embodiment

Hereinafter, the embodiment of the present invention will be described with reference to the accompanying drawings. The following description does not limit the technical scope or the meaning of the terms described in the claims. Dimensional ratios in the drawings are exaggerated for convenience of description, and may be different from actual ratios.

The moving device according to the present embodiment can be used for catalyst replacement operation and the like for a multi-tubular reactor 1. More specifically, the moving device can be used in transporting and moving devices used for respective operations (hereinafter, these devices are collectively referred to as an operation device), the respective operations including removing catalyst or other solid C from a reaction tube 4 (operation of removing catalyst or other solid), cleaning the reaction tube 4 from which the catalyst or other solid C has been removed (reaction tube cleaning operation), filling the reaction tube 4 with new catalyst or other solid C (operation of filling catalyst or other solid), measuring the layer length of the catalyst or other solid C in the reaction tube 4 filled with the catalyst or other solid C (layer length measurement operation), measuring a pressure drop in the reaction tube 4 filled with the catalyst or other solid C (pressure drop measurement operation), and adjusting the amount of the catalyst or other solid C filled in the reaction tube 4 (filling amount adjustment operation) (hereinafter, these operations are collectively referred to as operation such as catalyst replacement). Each of the operations does not necessarily need to be performed as a part of the catalyst replacement operation. The moving device according to the present embodiment can also be used to perform each of the operations regardless of whether it is associated with the catalyst replacement operation. In the moving device and a movement method according to one aspect of the present invention, a plurality of insertion members and a cart module including a rotary body slide in a first direction. Therefore, even when a tube sheet surface has unevenness or is inclined, it is possible to more reliably move a predetermined moving distance as compared with a configuration in which the moving device is lifted from the tube sheet surface and moved.

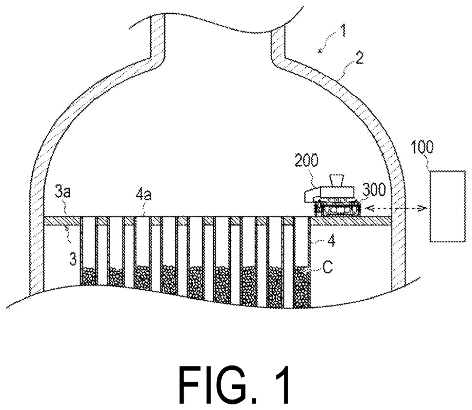

As illustrated in FIG. 1, the moving device according to the present embodiment moves on a tube sheet surface 3a on which openings 4a of a plurality of reaction tubes 4 in a multi-tubular reactor are arranged. First, the multi-tubular reactor 1 will be described.

### Multi-tubular reactor

As illustrated in FIG. 1, the multi-tubular reactor 1 includes a lid portion 2, a tube sheet 3, and the plurality of reaction tubes 4.

In the multi-tubular reactor 1, usually thousands to tens of thousands of the reaction tubes 4 are arranged. In general, an upper end portion of the reaction tube 4 is joined to the tube sheet 3 by welding or the like. An upper surface of the tube sheet 3 (hereinafter, referred to as tube sheet surface 3a) may have unevenness due to welding marks such as weld beads and spatters, resulting in a non-smooth portion.

The reaction tube 4 is a reaction tube filled with the catalyst or other solid C, for example, granular catalyst, granular ceramic (for example, a spherical body of silica, a spherical body of alumina, or a spherical body of zirconia), or granular metallic Raschig ring. An upper end opening (hereinafter, simply referred to as the opening 4a) communicating with the outside of the reaction tube 4 is formed at an upper end of the reaction tube 4 in the height direction. A lower end opening (not illustrated) communicating with the outside of the reaction tube 4 is formed at a lower end of the reaction tube 4 in the height direction. Although depending on a target reaction, the reaction tube 4 can be formed to have an inner diameter of 10 mm to 60 mm and a length of 3000 mm to 10000 mm, for example.

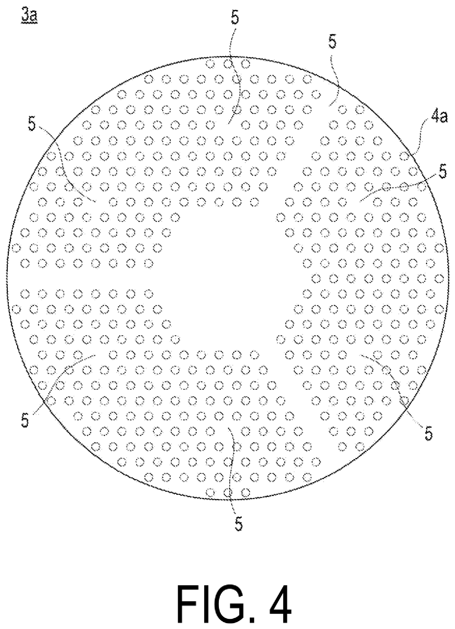

The reaction tubes 4 are regularly arranged at regular intervals along the tube sheet surface 3a. The tube sheet surface 3a can be configured horizontally. The multi-tubular reactor is often located several meters to several tens of meters above the ground. Thus, the tube sheet surface of the multi-tubular reactor is not necessarily horizontal, and may be slightly inclined. Therefore, the term "substantially horizontal" means a plane which is inclined at an angle of -5 degrees to +5 degrees from a horizontal plane and is parallel to the tube sheet surface. As an example, as illustrated in FIG. 4, the reaction tubes 4 can be regularly arranged in one direction on the tube sheet surface 3a, and in a direction inclined clockwise or counterclockwise by approximately 60 degrees relative to the one direction.

As illustrated in FIG. 4, the tube sheet surface 3a is provided with closing portions 5 as a portion where the opening 4a is not provided, such as a reinforced portion for ensuring the strength of the multi-tubular reactor 1 at a certain level or higher, or a portion where a part of the reaction tube 4 is closed to insert a thermocouple. The closing portions 5 can be provided at optional intervals on the tube sheet surface 3a according to the purpose.

A system for catalyst replacement and the like includes an input device 100, an operation device 200, and a moving device 300. The moving device 300 can be moved on the tube sheet 3 of the multi-tubular reactor 1 according to an instruction from the input device 100. Hereinafter, each configuration will be described.

### Input device

The input device 100 can also be provided inside the multi-tubular reactor 1, and can also be provided outside as illustrated in FIG. 1. The input device 100 may be provided outside the multi-tubular reactor 1 at the time of an operation of removing the catalyst or other solid C, or a dust-generating operation such as a filling operation.

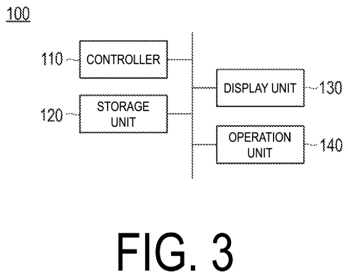

As illustrated in FIG. 3, the input device 100 includes a controller 110, a storage unit 120, a display unit 130, and an operation unit 140. The components are connected to each other via a bus for exchanging signals.

The input device 100 is configured to be able to receive an instruction (input) from a user such as an operator engaged in the operation such as catalyst replacement. In addition, the input device 100 is configured to be able to wirelessly communicate with each of the operation device 200 and the moving device 300.

The controller 110 includes a CPU (Central Processing Unit), and executes control for each component described above and various arithmetic processing according to a program.

The storage unit 120 includes a ROM (Read Only Memory) that stores various programs and various types of information in advance, a RAM (Random Access Memory) that temporarily stores a program and information as a work area, an HDD (Hard Disk Drive) that stores various programs and various types of information, an SSD (Solid State Drive), and the like. As a result, the operation such as catalyst replacement on the reaction tube 4 described later can be set such that data can be updated so as to reflect the current status of a reaction tube 4 in which the catalyst replacement has been finished, and a reaction tube 4 in which the catalyst replacement has not yet been finished, each time the operation such as catalyst replacement is performed at the position of the reaction tube 4 installed in the tube sheet 3.

The display unit 130 includes an LCD (Liquid Crystal Display), an organic EL (Elecronic Luminescence) display, and the like, and is configured to be able to display various types of information.

The operation unit 140 includes, for example, a button, a joystick, and the like, and is configured to be able to receive an input from the user. In this case, the operation device 200 and the moving device 300 can be moved by a predetermined distance at an optional timing by a button operation by an operator, and can be partially automatically moved.

### Operation device

The operation device 200 is configured to be mounted on the moving device 300 as illustrated in FIG. 1. The operation device 200 may be a dedicated device prepared for each process of the operation such as catalyst replacement, or may be a device prepared for performing some of the processes of the operation such as catalyst replacement. The operation device 200 is, for example, a device for removing catalyst or other solid, a reaction tube cleaning device, a device for filling catalyst or other solid, a layer length measuring device, a pressure drop measuring device, or a filling amount adjusting device.

A controller of the operation device 200 includes a CPU. A signal indicating that the moving device 300 has completed the movement to the vicinity of the target reaction tube is transmitted to the operation device 200 by the input device 100. Upon receiving a signal instructing operation such as removal of catalyst or other solid, washing of the reaction tube, filling of catalyst or other solid, layer length measurement, or pressure drop measurement, the operation device 200 starts the above-described operation.

Commands from the input device 100 are programmed, and almost all operation processes can be automated by computer control. On the other hand, commands from the input device 100 may be executed through button operation at an optional timing based on the operator's determination, thereby enabling partial automation.

### Moving device

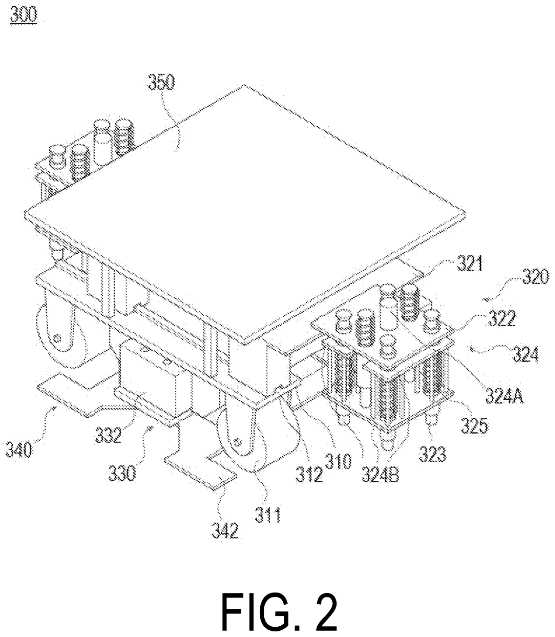

As illustrated in FIG. 2, the moving device 300 includes a platform portion 350, and a movement propulsion unit movable on the tube sheet 3 with the platform portion 350 mounted. The movement propulsion unit includes a cart module 310, a first movement propulsion unit 320, and a second movement propulsion unit 330. The controller of the moving device 300 includes a CPU. The controller of the moving device 300 controls, for example, the operation of the movement propulsion unit.

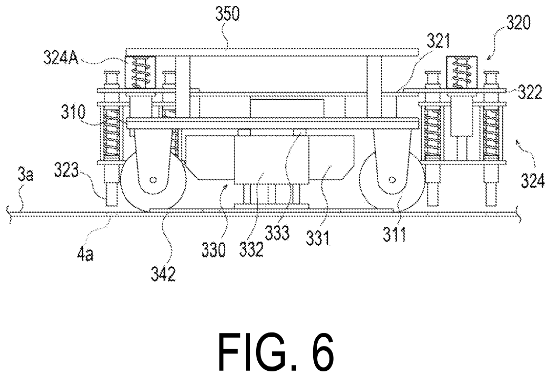

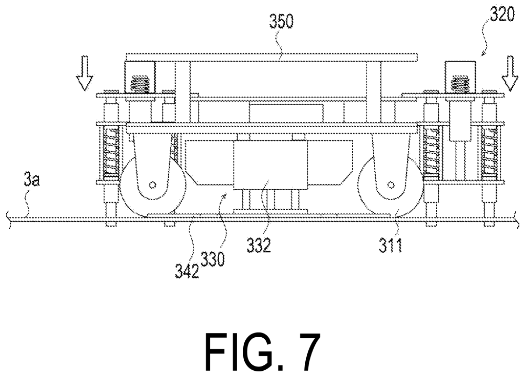

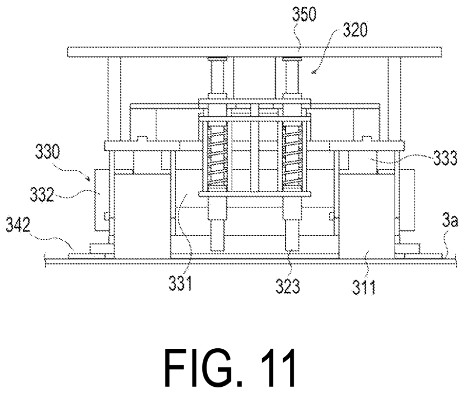

The first movement propulsion unit 320 is a movement propulsion unit for movement in the first direction. The second movement propulsion unit 330 is a movement propulsion unit for movement in a second direction. As illustrated in FIGS. 6 to 9, the first direction is a direction along which the reaction tubes 4, into which the insertion member 323 can be inserted, are arranged in a straight line on a plane parallel to the tube sheet surface 3a. Any direction may be allowable as long as the reaction tubes 4, into which the insertion member 323 can be inserted, are arranged in a straight line. The direction can be set as a direction in which the distance between the adjacent reaction tubes 4 is shortest. As illustrated in FIGS. 11 to 14, the second direction is a direction substantially orthogonal to the first direction. The substantially orthogonal direction is a direction that falls within a range of the angle from -5° to +5° relative to the orthogonal direction. A third direction is, for example, a direction forming an angle of 60 degrees relative to the first direction. For example, as illustrated in FIG. 4, the reaction tubes 4 are arranged along the first direction and the third direction.

### First movement propulsion unit

The first movement propulsion unit 320 includes an insertion-retraction module and a first slide module. The first movement propulsion unit 320 is configured to be capable of relatively approaching and separating from the cart module 310 in the first direction along a plane parallel to the tube sheet surface 3a. The first movement propulsion unit includes an insertion member insertion-retraction mechanism described later.

### Insertion-retraction module

The insertion-retraction module includes the insertion member 323, a fixing member 322, a mounting member 324, and an urging member 325. The insertion member 323, the fixing member 322, the mounting member 324, and the urging member 325 constitute an insertion member insertion-retraction mechanism to be inserted into and retracted from the opening 4a of the reaction tube 4. The mounting member 324 allows the insertion member 323 to be mounted thereto movable in a direction substantially perpendicular to the tube sheet surface 3a, and also constitutes an insertion member height adjustment mechanism that maintains the moving device 300 substantially horizontal when at least one of the three or more insertion members 323 comes into contact with the closing portion 5. The insertion-retraction module is connected to the cart module 310 via, for example, the first slide module (more specifically, a first base member 321 to be described later), that is, indirectly. The insertion-retraction module may be directly connected to the cart module 310.

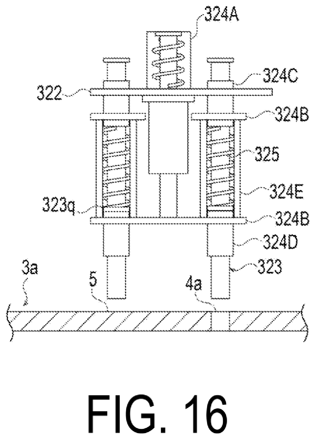

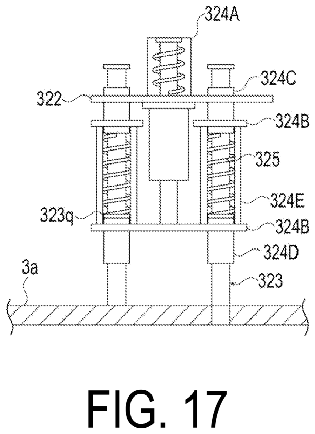

As illustrated in FIGS. 16 to 18, the insertion member 323 is configured to be movable in the direction substantially perpendicular to the tube sheet surface 3a, and to be insertable into the opening 4a of the multi-tubular reactor 1 into which the catalyst or other solid C can be charged. Here, the direction substantially perpendicular means a direction perpendicular to the substantially horizontal direction.

The three or more insertion members 323 are provided so as to be insertable into the reaction tubes 4 different from each other. In the present embodiment, a total of eight insertion members are provided, i.e., four on the front side and four on the rear side with respect to a first direction described later. The number of the insertion members 323 may be two on the front side and two on the rear side with respect to the first direction, or may be four or more on the front side with respect to the first direction. In addition, as long as the three or more insertion members 323 are provided so as to be insertable into the reaction tubes 4 different from each other, and can move in the first direction, the insertion member may be provided at the front or rear with respect to the second direction.

The outer diameter of the insertion member 323 is smaller than the inner diameter of the reaction tube 4. Preferably, the insertion member 323 has a columnar shape. For example, in the case of a reaction tube having an inner diameter of 25 mm, a columnar shape having an outer diameter of 20 mm or more and 24.5 mm or less is preferable, and a columnar shape having an outer diameter of 22 mm or more and 24 mm or less is more preferable.

As long as the opening 4a of the reaction tube 4 exists, each of the insertion members 323 is configured at such a position as to be inserted into the opening 4a on a horizontal plane with respect to the tube sheet surface 3a. As described above, since the reaction tubes 4 are regularly arranged at regular intervals along the tube sheet surface 3a, each of the insertion members 323 may be arranged at a position according to this regular arrangement.

Since at least two insertion members 323 are inserted into the reaction tubes 4, the positions of the insertion members 323 in the horizontal direction are fixed. When the positions of the insertion members 323 are fixed, the movement propulsion unit allows the moving device 300 to move a predetermined distance from the insertion members 323 inserted into the reaction tubes 4 as a starting point. Thus, it is important to continuously fix the positions of the insertion members 323 without being bent during insertion into the opening 4a of the reaction tube 4 or during the movement. Therefore, the material of the insertion members 323 is preferably stainless steel or the like.

A columnar compression rubber portion can be provided at a tip end of the insertion member 323. By providing a mechanism in which the compressed rubber portion is compressed in the vertical direction when the insertion member 323 is inserted into the reaction tube 4, the compression rubber portion expands in the outer diameter direction of the reaction tube 4. As a result, a clearance between the opening 4a of the reaction tube 4 and the insertion member 323 is reduced, and the position of the insertion member 323 can be more firmly fixed with respect to the reaction tube 4.

The fixing member 322 is formed in a thin plate shape as an example, and is integrally formed with the first base member 321 to be described later, which is similarly formed in a thin plate shape. In the present embodiment, the fixing member 322 is disposed at an end portion of the first base member 321 in one direction. To the fixing member 322, the mounting member 324, with the insertion members 323 retained therein, is mounted to be movable in the height direction, and the position (height) of the fixing member 322 with respect to the cart module 310 is fixed.

The mounting member 324 is configured to be movable downward with respect to the fixing member 322. The mounting member 324 retains the insertion members 323. As illustrated in FIGS. 16 to 18, the mounting member 324 is configured to mount the insertion members 323 thereto such that the insertion members 323 are movable along the same path both when the insertion members 323 approach the tube sheet surface 3a and when the insertion members 323 separate from the tube sheet surface 3a. As illustrated in FIG. 16 and the like, the mounting member 324 includes a pressing portion 324A, a first coupling portion 324B, a first extending portion 324C, a second extending portion 324D, and a second coupling portion 324E.

The pressing portion 324A is configured as a power source that presses the mounting member 324 with the insertion members 323 retained to the fixing member 322, when the mounting member 324 is moved downward. The pressing portion 324A is provided with an actuator, and is configured to generate or release a pressing force against the mounting member 324 with the insertion members 323 retained therein. The pressing portion 324A generates the pressing force, so that the mounting member 324 moves downward, and the retained insertion members 323 also move downward. By releasing the pressing force, the mounting member 324 moves upward, and the retained insertion members 323 also move upward. The pressing portion 324A can constitute the insertion member insertion-retraction mechanism.

The first coupling portion 324B is configured to couple a plurality of the first extending portions 324C located at substantially the same height in the horizontal direction, and couple a plurality of the second extending portions 324D located at substantially the same height in the horizontal direction. The upper end of each of the second extending portions 324D fixed at substantially the same height by the first coupling portion 324B retains the insertion member 323 at a retaining portion 323q of the insertion member 323, and supports the insertion member 323 from below, and thus functions to prevent the insertion member 323 from falling and to align the heights of the plurality of insertion members 323. The first coupling portion 324B can constitute the insertion member height adjustment mechanism.

The first extending portion 324C is configured to allow the insertion member 323 to be inserted therethrough, and is configured to be retained on an upper end portion of the urging member 325. The second extending portion 324D is provided below the first extending portion 324C to be separated from the first extending portion 324C, and is configured to allow the insertion member 323 to be inserted therethrough. The first extending portion 324C and the second extending portion 324D are configured such that the insertion member 323 forms a guide shape along the substantially vertical direction. The first extending portion 324C and the second extending portion 324D protect the insertion member 323 from being damaged at the time such as when the insertion member 323 moves.

The mounting member 324 includes a member having a guide shape such as a tube formed along a direction in which the insertion member 323 approaches and separates from the reaction tube 4, similarly to the first extending portion 324C and the second extending portion 324D. As a result, the insertion member 323 that abuts against the closing portion 5 as the mounting member 324 descends is stopped on the closing portion 5, and then can move upward relative to the mounting member 324. In this manner, the height of the insertion member 323 can be smoothly adjusted.

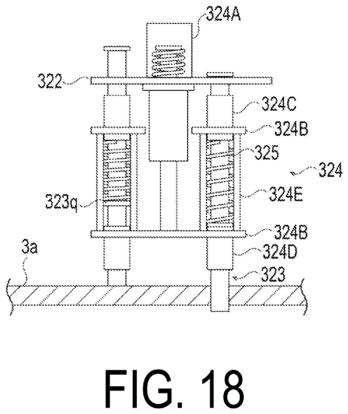

The first extending portion 324C and the second extending portion 324D are formed in a cylindrical shape in the present embodiment. However, as long as the insertion member 323 can move on the same line between the case of approaching the opening 4a of the reaction tube 4 and the case of separating from the opening 4a, the specific shape of the first extending portion 324C and the second extending portion 324D is not limited to a cylinder, and may be a hollow polygonal prism such as a quadrangular prism. As illustrated in FIG. 18, when one of the insertion members 323 is inserted into the opening 4a of the reaction tube 4, and the other insertion member 323 abuts against the closing portion 5, as long as the height of the insertion member 323 can be adjusted, the mounting member 324 may not include the first extending portion 324C.

The second coupling portion 324E is configured to connect the first extending portion 324C and the second extending portion 324D joined to the first coupling portion 324B and separated in the height direction. In the present embodiment, the first extending portion 324C and the second extending portion 324D are coupled by providing four substantially columnar members for a single insertion member 323 as the second coupling portion 324E. However, as long as the first extending portion 324C and the second extending portion 324D can be coupled, the specific shape of the second coupling portion 324E may not be columnar, and the number of the second coupling portions 324E provided for a single insertion member 323 may not be four.

In the present embodiment, although four first extending portions 324C and four second extending portions 324D are provided, which are equal in number of the insertion members 323, the first extending portions 324C and the second extending portions 324D to be provided only need to be equal in number to the insertion members 323, provided that the number is three or more.

The urging member 325 is configured to be extendable and retractable so as to urge the insertion member 323 in the substantially vertical direction within a predetermined length range. The urging member 325 has elasticity, and an upper end of the urging member 325 is in contact with a lower end of the first extending portion 324C. The urging member 325 is configured to include a helical spring in the present embodiment. However, the urging member 325 may not be a helical spring as long as the insertion member 323 can be urged in a substantially vertical direction within a predetermined length range. The urging member 325 constitutes the insertion member insertion-retraction mechanism and the insertion member height adjustment mechanism to be described later.

### First slide module

The first slide module is connected to the cart module 310 in such a manner that the cart module 310 is slidable in the first direction. The first slide module is made up of a first slide member 312 and the first base member 321.

The first slide member 312 is made up of a drive unit (electric cylinder), a rail, and the like, and can be coupled to the cart module 310. The first base member 321 is a plate-like member slidable in the first direction relative to the cart module 310, is coupled to the cart module 310 via the first slide member 312, and is coupled to the insertion-retraction module via the fixing member 322.

### Cart module

The first movement propulsion unit 320, the second movement propulsion unit 330, and the platform portion 350 are connected to the cart module 310. The cart module 310 includes a rotary body 311 at a lower portion thereof. The cart module 310 includes, for example, four rotary bodies 311 which are known tires. The rotary body 311 allows the moving device 300 to move on the tube sheet 3 by a predetermined distance by rotating in contact with the tube sheet 3. For example, the rotary body 311 is configured to be movable in the first direction. Here, the tire corresponds to a specific example of the rotary body of the present invention, and may be a rotary body such as a wheel other than the tire.

After the insertion member 323 of the insertion-retraction module is inserted into the reaction tube 4, the first slide module is slid and moved in the first direction relative to the cart module 310 using the first slide member 312. During this sliding movement, the cart module 310 can move a predetermined distance set in advance, while rotating the rotary body 311.

To prevent the first slide member 312 provided in the first movement propulsion unit 320 from intersecting a second slide member 333 provided in the second movement propulsion unit 330 to be described later, one of these slide members can be exemplarily provided on an upper surface of the cart module 310, and the other can be provided on a lower surface of the cart module 310.

### Second movement propulsion unit

The second movement propulsion unit 330 is configured to be capable of approaching and separating from the cart module 310 so as to promote movement in a direction (second direction) horizontal to the tube sheet surface 3a and substantially orthogonal to the first direction. To promote the movement in the second direction, the second movement propulsion unit 330 includes a lift foot 340 and a second slide module.

### Lift foot

The lift foot 340 is a support member configured to be in contact with the tube sheet surface 3a and support the cart module 310. The lift foot 340 includes a lifting unit 332 and a grounding portion 342. The lifting unit 332 is configured to be switchable between grounding of the grounding portion 342 provided in the lift foot 340 on the tube sheet 3, and release of the grounding. The lifting unit 332 includes an actuator such as an air cylinder so as to switch between grounding of the grounding portion 342 provided in the lift foot 340 on the tube sheet 3 and release of the grounding. For example, the lifting unit 332 causes the grounding portion 342 to be grounded on the tube sheet surface 3a at a pressure level selected from a plurality of stepwise pressure levels.

The grounding portion 342 is formed in a thin plate shape and is configured to be able to be grounded on the tube sheet surface 3a. The grounding portion 342 is made of, for example, a metal material that generates moderate friction with the tube sheet surface 3a. When the grounding portion 342 is grounded on the tube sheet surface 3a at a pressure of, for example, about 0.2 MPa, the position of the cart module 310 in the first direction is fixed. Specifically, the rotation of the rotary body 311 is inhibited, and the grounding portion 342 functions as a brake. When the grounding portion 342 is pressed against the tube sheet surface 3a at a pressure of, for example, about 0.6 MPa, the rotary body 311 rises and is separated from the tube sheet surface 3a. That is, the cart module 310 is separated from the tube sheet surface 3a. Specifically, the cart module 310 rises, and the grounding portion 342 functions as a lift. At this time, the second slide module and the first movement propulsion unit 320 rise together with the cart module 310. When the lifting unit 332 raises the grounding portion 342 from this state, the rotary body 311 comes in contact with the tube sheet surface 3a. That is, the cart module 310 comes in contact with the tube sheet surface 3a. At this time, the second slide module and the first movement propulsion unit 320 descend together with the cart module 310. Here, the lift foot 340 corresponds to a specific example of the lifting mechanism and the fixing mechanism of the invention of the present application.

### Second slide module

The second slide module is connected to the cart module 310 in such a manner that the cart module 310 separated from the tube sheet surface 3a is slidable in the second direction on the tube sheet 3. The first movement propulsion unit 320 slides in the second direction together with the cart module 310. The second slide module includes the second slide member 333 and a second base member 331. The second slide member 333 includes a drive unit (electric cylinder) coupled to the cart module 310, a rail, and the like. The sliding direction of the second slide member 333 is orthogonal to the sliding direction of the first slide member 312 at a skew position. After the second slide module, the cart module 310, and the first movement propulsion unit 320 are lifted by the lifting unit 332, the cart module 310 connected to the second slide member 333, and the first movement propulsion unit 320 slide and move in the second direction by the second slide member 333 by a distance registered in advance in a reaction tube changing mechanism. The second base member 331 is coupled to the cart module 310 via the drive unit (electric cylinder), the rail, and the like, and is configured to be slidable in the second direction relative to the cart module 310. The grounding portion 342 is connected to the second base member 331 via the lifting unit 332. The lift foot 340 may be directly connected or indirectly connected to the second slide module.

### Platform portion

In the present embodiment, the platform portion 350 mounted to the upper side of the cart module 310 is configured to be flat so that the operation device 200 can be placed thereon. However, as long as the operation device 200 can be stably placed, the platform portion 350 may be provided with unevenness and the like on a flat shape, and may not be flat. An electric rotary actuator and the like may be provided on the platform portion 350, and the operation device 200 mounted on the platform portion 350 may be configured to be rotatable with respect to the cart module 310 on a plane parallel to the tube sheet. In the present embodiment, although the platform portion 350 is on the cart module 310, the member of the movement propulsion unit, on which the platform portion 350 is provided, is not limited to a particular member. For example, the platform portion 350 may be on the first movement propulsion unit 320.

### Movement method using moving device

The moving device 300 is carried to a predetermined position (initial position) of the tube sheet 3 by an operator. The moving device 300 is carried into the reactor from a manhole provided on a side surface of the reactor or a reaction gas flow port provided in an upper portion of the reactor. To smoothly carry the moving device 300, the moving device 300 may be configured to be dividable, and may be divided, carried into the reactor, and then assembled in the reactor. The moving device 300 can be moved to a target reaction tube 4 by combining the movement in the first direction and the movement in the second direction through the input device 100. In FIGS. 6 to 9, 11 to 14, and 16 to 18, illustrations of the reaction tube 4 are omitted for convenience.

### Movement in first direction

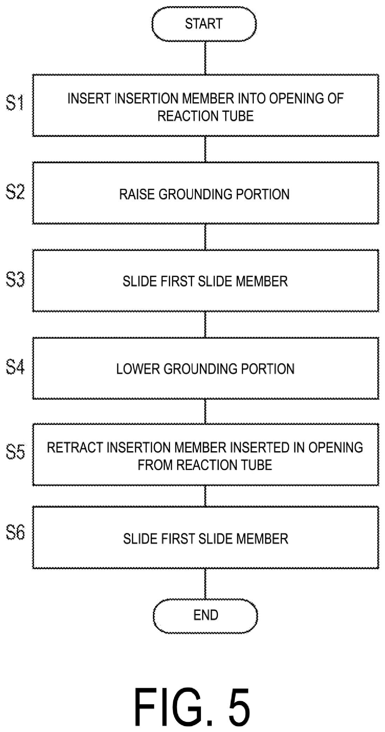

The controller of the moving device 300 performs, for example, the processing in steps S1 to S6 illustrated in FIG. 5 and causes the moving device 300 to move in the first direction. Hereinafter, the movement of the moving device 300 in the first direction will be described with reference to FIGS. 6 to 9 together with FIG. 5.

First, the cart module 310 is provided at a first position in the first direction, and as illustrated in FIG. 6, the insertion member 323 is located immediately above the opening 4a of the reaction tube 4. At this time, the grounding portion 342 is in contact with the tube sheet surface 3a at a pressure of, for example, about 0.2 MPa. Next, the controller causes the pressing portion 324A to generate a pressing force to move the mounting member 324 downward with the insertion members 323 retained. As a result, as illustrated in FIGS. 6 to 7, the insertion member 323 is inserted into the opening 4a of the reaction tube 4 (step S1).

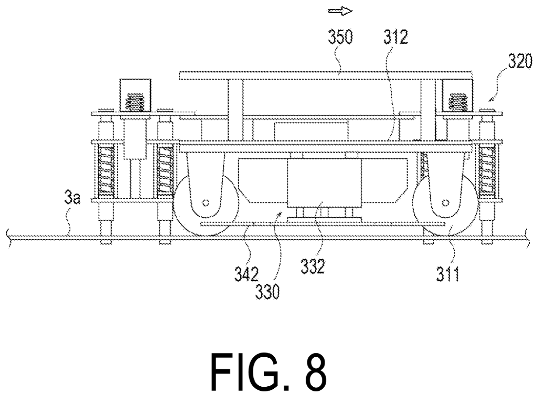

Next, after the grounding portion 342 is raised by the lifting unit 332 (step S2), the controller causes the drive unit (electric cylinder) of the first slide module to slide the first slide member 312 (step S3). As a result, in a state where the grounding portion 342 is separated from the tube sheet surface 3a, the cart module 310 connected via the first slide member 312, the second movement propulsion unit 330 below the cart module 310, and the platform portion 350 on the cart module 310 slide and move in the first direction with respect to the reaction tube 4 with a smaller driving force by using the rotation of the rotary body 311 (FIG. 8). That is, the cart module 310 moves from the first position to the second position in the first direction. At this time, the insertion member 323 remains inserted into the opening 4a of the reaction tube 4.

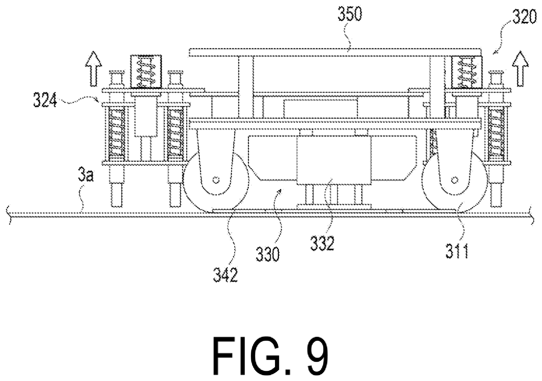

Next, after the grounding portion 342 is lowered by the lifting unit 332 (step S4), the controller causes the pressing force generated by the pressing portion 324A to be released, and causes the mounting member 324 with the insertion members 323 retained to move upward (see FIG. 9). As a result, the insertion member 323 inserted into the opening is retracted from the reaction tube 4 with the grounding portion 342 in contact with the tube sheet surface 3a at a pressure of, for example, about 0.2 MPa (step S5). At this time, since the grounding portion 342 functions as a brake, for example, even if the tube sheet surface 3a is inclined, or has unevenness or the like, the cart module 310 is less likely to be misaligned in the first direction.

Next, the controller causes the first slide member 312 to slide in a state where the insertion member 323 of the first movement propulsion unit 320 has been retracted from the reaction tube 4 (step S6). Since the insertion member 323 is not inserted into the opening 4a of the reaction tube 4, the cart module 310 coupled via the first slide member 312, and the first movement propulsion unit 320, instead of the second movement propulsion unit 330 below the cart module 310, slide and move in the first direction with respect to the tube sheet 3.

The moving device 300 of the present embodiment is configured such that the mounted operation device 200 can operate for each of the reaction tubes 4, and can operate for each of the reaction tubes 4 by moving a desired distance to be described later. By repeating the operations in steps S1 to S6 described above, the moving device 300 can be moved from the position before movement to a desired position.

With such a configuration, the operation such as catalyst replacement can be at least partially automated. That is, the expression "automation can be implemented at least partially" as described herein means not only a case where automation can be consistently implemented from the start to the end of the operation such as catalyst replacement, but also a case where part of the operation from the start to the end of the operation such as catalyst replacement can be automated.

For example, in the processing in steps S1 to S6 described above, the controller of the moving device 300 controls each unit so that all the insertion members 323 operate simultaneously in conjunction with each other. With such a configuration, the motion of the plurality of insertion members 323 can be collectively operated using the common actuator, and the device configuration can be simplified. All the insertion members 323 provided in the moving device 300 may individually operate at different timings as long as the device does not fall over or tilt.

### Movement in second direction

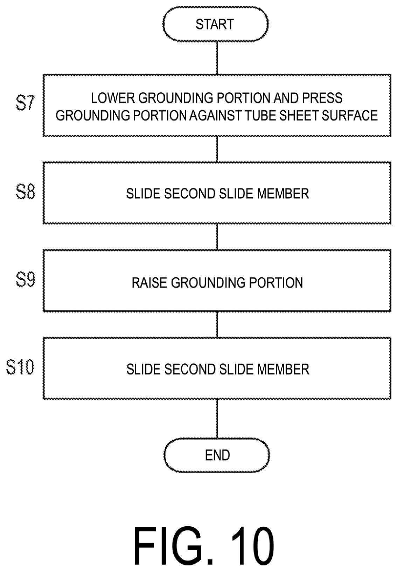

The controller of the moving device 300 performs, for example, the processing in steps S7 to S10 illustrated in FIG. 10, and causes the moving device 300 to move in the second direction. Hereinafter, the movement of the moving device 300 in the second direction will be described with reference to FIGS. 11 to 14 together with FIG. 10.

Similarly to the movement in the first direction, the present description starts from a state where the insertion member 323 is located immediately above the opening 4a of the reaction tube 4 at the start of the movement, and the grounding portion 342 is in contact with the tube sheet surface 3a (see FIG. 11). At this time, the grounding portion 342 is in contact with the tube sheet surface 3a at a pressure of, for example, about 0.2 MPa.

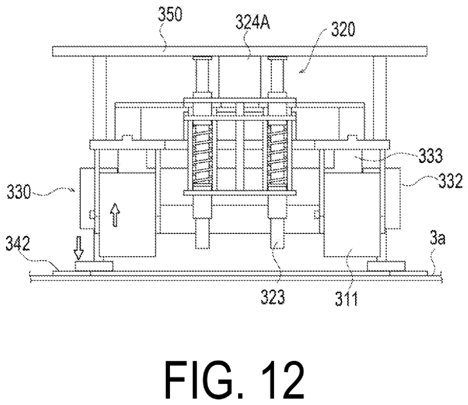

Next, the controller causes the air cylinder to lower the grounding portion 342 at a pressure of, for example, about 0.6 MPa, and press the grounding portion 342 against the tube sheet surface 3a (step S7). As a result, the cart module 310 and the first movement propulsion unit 320 rise, and the rotary body 311 is separated from the tube sheet 3 (FIG. 12).

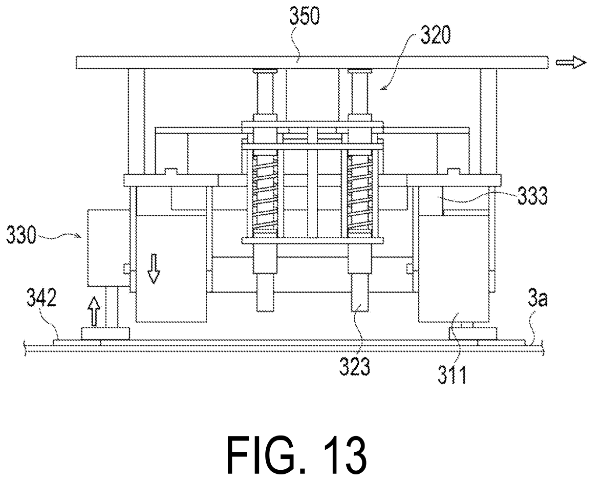

Next, the controller operates the drive unit of the second slide member 333 to slide the second slide member 333 (step S8). Specifically, to move the second movement propulsion unit 330 relative to the cart module 310 and the first movement propulsion unit 320, the controller operates the drive unit of the second slide member 333 by a distance registered in advance for the reaction tube changing mechanism. As a result, the cart module 310 and the first movement propulsion unit 320 move in the second direction (FIG. 13).

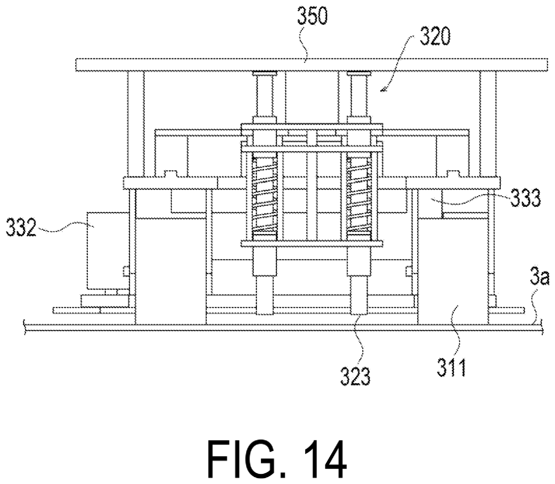

Next, the controller causes the actuator of the lifting unit 332 to raise the grounding portion 342 (step S9). As a result, the grounding portion 342 is separated from the tube sheet 3, and the rotary body 311 comes in contact with the tube sheet 3 (FIG. 14).

Next, the controller operates the drive unit of the second slide member 333 to slide the second slide member 333 (step S10). As a result, the lift foot 340 slides and moves in the second direction relative to the cart module 310 and the first movement propulsion unit 320, and the relative positional relationship of the lift foot 340 to the cart module 310 and the first movement propulsion unit 320 is restored (see FIGS. 11 and 14).

As described above, it is not necessary to use the insertion member 323 for the movement in the second direction. However, to ensure more reliable movement, the insertion member 323 may be moved while being inserted into and retracted from the opening 4a as necessary.

By repeating the above-described operations, it is possible to perform the movement in the second direction necessary for moving the moving device 300 from the position before the movement to a desired position.

### Movement in third direction

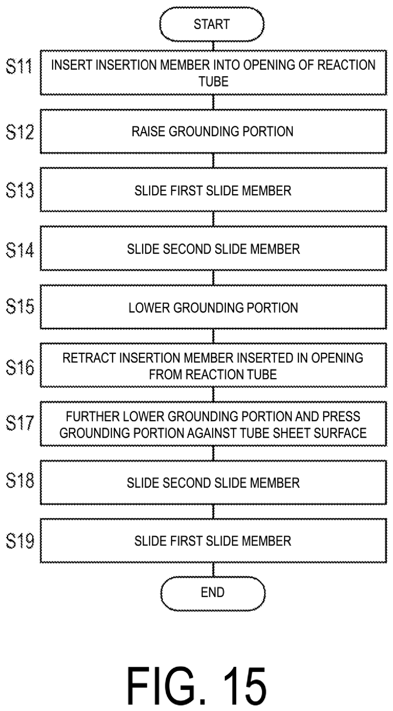

For example, the controller of the moving device 300 causes the moving device 300 to move in the third direction by combining the processing for movement in the first direction with the processing for movement in the second direction. The controller of the moving device 300 performs, for example, the processing in steps S11 to S19 illustrated in FIG. 15 and causes the moving device 300 to move in the third direction.

First, the controller causes the mounting member 324 with the insertion members 323 retained to move downward in the height direction in the state where the grounding portion 342 is in contact with the tube sheet surface 3a at a pressure of, for example, about 0.2 MPa. As a result, the insertion member 323 is inserted into the opening 4a of the reaction tube 4 (step S11).

Next, after the grounding portion 342 is raised by the lifting unit 332 (step S12), the controller causes the drive unit (electric cylinder) of the first slide module to slide the first slide member 312 (step S13). As a result, in the state where the grounding portion 342 is separated from the tube sheet surface 3a, the cart module connected via the first slide member 312, the second movement propulsion unit 330 below the cart module 310, and the platform portion 350 on the cart module 310 slide and move in the first direction relative to the reaction tube 4 with a smaller driving force by using the rotation of the rotary body 311.

Next, the controller operates the drive unit of the second slide member 333 to slide the second slide member 333 (step S14). As a result, the lift foot 340 slides and moves in the second direction relative to the cart module 310 and the first movement propulsion unit 320. At this time, the insertion member 323 remains inserted into the opening 4a of the reaction tube 4.

Next, after the grounding portion 342 is lowered by the lifting unit 332 (step S15), the controller causes the insertion member 323 inserted into the opening 4a to be retracted from the reaction tube 4 (step S16). Subsequently, the controller causes the lifting unit 332 to further lower the grounding portion 342 and press the grounding portion 342 against the tube sheet surface 3a at a pressure of, for example, about 0.6 MPa (step S17). As a result, the cart module 310 and the first movement propulsion unit 320 rise, and the rotary body 311 is separated from the tube sheet 3.

Next, the controller operates the drive unit of the second slide member 333 to slide the second slide member 333 (step S18). As a result, the cart module 310 and the first movement propulsion unit 320 move in the second direction.

Next, the controller causes the first slide member to slide (step S19). At this time, since the insertion member 323 is not inserted into the opening 4a of the reaction tube 4, the first movement propulsion unit 320 slides and moves in the first direction relative to the tube sheet 3.

By repeating the above-described operations, it is possible to perform the movement in the third direction necessary for moving the moving device 300 from the position before the movement to a desired position.

The controller can also move the moving device 300 in a direction different from the third direction by combining the processing for movement in the first direction with the processing for movement in the second direction.

Since the movement propulsion unit has the reaction tube changing mechanism as described above, the insertion member 323 can be moved by a predetermined distance to immediately above the opening 4a of the reaction tube 4 to be inserted next after the insertion member 323 is retracted from the reaction tube 4. Unlike a walking device or an automatic walking device that moves by a member to be inserted into the reaction tube 4, such as an insertion member, a moving device that uses the insertion member 323 and the rotary body 311 in combination can move more reliably without falling over.

### Insertion member insertion-retraction mechanism

The insertion member insertion-retraction mechanism can perform retraction and insertion operation of the insertion member 323 into and from the reaction tube 4 by the pressing portion 324A applying a pressing force in a substantially vertically downward direction or upward direction to the mounting member 324 with the insertion members 323 retained. When one of the retained insertion members 323 abuts against the closing portion 5, the urging member 325 is sandwiched and compressed between the retaining portion 323q and the lower end of the first extending portion 324C. A restoring force of the compressed urging member 325 acts as one of the forces that push down the insertion member 323 when the mounting member 324 is moved upward to perform an operation of moving to another reaction tube, and urge the insertion member 323 to smoothly return to the same original height as the other insertion members 323 not having abutted against the closing portion 5, and constitutes an insertion member insertion-retraction mechanism for smoothly inserting the plurality of insertion members 323 into other reaction tubes 4.

### Reaction tube changing mechanism

The reaction tube changing mechanism is configured to change the reaction tubes 4 into which the insertion members 323 are to be inserted. The operation device 200 moves to its suitable position for performing an operation on a target tube by the moving device 300, and then performs an operation such as removal of the catalyst or other solid, washing of the reaction tube, filling of the catalyst or other solid, layer length measurement, or pressure drop measurement. When the operation at a certain position (reaction tube 4) is completed, the operation device 200 that performs these operations needs to move to the next position (reaction tube 4).

The reaction tube changing mechanism includes the first slide module, or includes the first slide module and the second slide module. This slide mechanism makes it possible to change the reaction tube 4 into which the insertion member 323 is to be inserted. When the operation at a certain position (reaction tube 4) is completed, the moving device 300 can move the operation device 200 to the next position (reaction tube 4) by the reaction tube changing mechanism and the insertion member insertion-retraction mechanism. The moving distance during the movement can be expressed by a pitch.

The pitch can be defined as a distance between a central axis of the reaction tube 4 at a certain position and a central axis of the nearest adjacent reaction tube 4. The operation device 200 may be moved based on a distance obtained by multiplying the pitch by a predetermined coefficient corresponding to the position of the reaction tube 4 before movement and the position of the reaction tube 4 as a movement destination. For example, the pitch may be registered in advance in the input device 100, and the electric cylinders in the first slide module and the second slide module may be driven by a predetermined amount by a signal from the controller 110 so that the operation device 200 can move a distance of a value obtained by multiplying the pitch by the predetermined coefficient. In this manner, misalignment can be prevented.

As a specific example, in a case where the first direction is defined as a direction in which the distance between the adjacent reaction tubes 4 is shortest, when the tube on which the operation device 200 performs operation is set as an operation target tube, and when it is desired to move to a target reaction tube located one pitch ahead the operation target tube as a starting point in a direction that forms a 60-degree angle relative to the first direction, it is possible to move to the target reaction tube by movement by (√3)/2 pitches in the second direction and movement by 0.5 pitches in the first direction. The state of the moving device 300 when the operation device 200 performs an operation is not limited to a particular state, and it is preferable that the operation device 200 performs an operation in a state where the insertion member 323 is inserted into the reaction tube 4 to prevent unexpected misalignment of the moving device 300 due to vibration and the like of the operation device 200.

The moving distance to be set by the reaction tube changing mechanism can slightly vary depending on the tolerance of the pitch of the reaction tubes 4, a difference in outer diameter (clearance) between the opening 4a of the reaction tube and the insertion member 323, rigidity of a frame of the moving device 300, and the like. A movement amount may be set to a value, at which the moving device 300 can be moved smoothly, by actually moving the moving device 300 in the reactor, while the movement amount is based on the pitch. Normally, a value slightly larger than the pitch is the movement amount to be set.

### Operation when insertion member abuts against closing portion of tube sheet

In a process of inserting the insertion member 323 into the opening 4a, the tube sheet 3 includes not only the opening 4a of the reaction tube 4 but also the closing portion 5, so that the insertion member 323 may not only be inserted into the opening 4a but also abut against the closing portion 5. The moving device 300 according to the present embodiment is configured such that the moving device 300 does not fall over or tilt even when the insertion member 323 abuts not against the opening 4a of the reaction tube 4, but against the closing portion 5 by the insertion member height adjustment mechanism. Hereinafter, an operation when the insertion member 323 abuts against the closing portion 5 will be described.

When one insertion member 323 abuts against the closing portion 5, the insertion member height adjustment mechanism is activated. When the first extending portion 324C of the mounting member 324 and the retaining portion 323q approach each other, the urging member 325 of the insertion member 323 abutting against the closing portion 5 is compressed more than the urging member 325 of the insertion member 323 inserted into the opening 4a of the reaction tube 4 (see FIG. 18).

Since the insertion member 323 is not fixed to the mounting member 324 but is only retained, the insertion member 323 abutting against the closing portion 5 moves relatively upward with respect to the mounting member 324 without hindering the operation of inserting the insertion member 323 into the opening 4a of the reaction tube 4. Thus, even if the insertion member 323 abuts against the closing portion 5 on the tube sheet 3 as illustrated in FIG. 18, the height of the insertion member 323 is adjusted to a position higher than an object inserted into the opening 4a of the reaction tube 4. Thus, the moving device 300 can be maintained substantially horizontal in its entirety without being inclined.

### Insertion member height adjustment mechanism

The insertion member height adjustment mechanism includes the mounting member 324 and the retaining portion 323q. The insertion member height adjustment mechanism is configured to mount the insertion member 323 movably in a direction substantially perpendicular to the tube sheet surface 3a, and to maintain the moving device 300 substantially horizontal by adjusting the height of the insertion member 323 when at least one of the three or more insertion members 323 comes into contact with the closing portion 5. Due to the presence of the insertion member height adjustment mechanism, the height of the insertion member 323 inserted into the opening 4a, and the height of the insertion member 323 on the closing portion 5 can be made different from each other to maintain the device substantially horizontal in its entirety. In the known moving device, due to the absence of such a mechanism, when the insertion member cannot be inserted into the reaction tube 4, the insertion member inserted into the opening 4a is lowered, and the insertion member to be inserted into the closing portion 5 remains raised, so that the device cannot be maintained substantially horizontal. As a result, the moving device is inclined or falls over.

The retaining portion 323q is provided in the insertion member 323, and is configured such that the insertion member 323 and the mounting member 324 are retained when the insertion member 323 moves toward the reaction tube 4. The retaining portion 323q allows the insertion member 323 to be slidably held by the mounting member 324, and can prevent the insertion member 323 from falling into the reaction tube 4, so that the height of the insertion member 323 with respect to the tube sheet surface 3a can be adjusted.

As described above, in the moving device 300 that moves on the tube sheet 3 of the multi-tubular reactor 1 according to the present embodiment, the plurality of insertion members 323 and the cart module 310 including the rotary body 311 slide and move in the first direction. As a result, the moving device 300 can move in the first direction with a simpler configuration. Hereinafter, this effect will be described.

For example, a configuration can be considered in which the moving device is lifted from the tube sheet surface and moved in the first direction. In this configuration, a large actuator and the like for lifting the moving device are required. Therefore, the moving device is likely to increase in size.

On the other hand, the moving device 300 of the present embodiment can be moved in the first direction without being lifted from the tube sheet surface. Specifically, the insertion-retraction module (insertion member 323) slides and moves in the first direction by the first slide module and the rotary body 311. Therefore, a large actuator and the like are not required, and the moving device 300 can be downsized. The moving device 300 thus configured can sequentially change the reaction tubes 4 along the first direction to perform the operation such as catalyst replacement. Thus, the moving device 300 can be moved in the first direction with a simpler configuration. Since a large actuator and the like are not required in the moving device 300, it is also possible to reduce the cost.

In the moving device 300, even when the tube sheet surface has unevenness or is inclined, it is possible to more reliably move a predetermined moving distance as compared with a configuration in which the moving device is lifted from the tube sheet surface and moved. In particular, since the moving device 300 includes the lift foot 340 that functions as a brake, the insertion-retraction module can be slid and moved in the first direction in a state where the position of the cart module 310 in the first direction is fixed. As a result, it is possible to suppress the occurrence of misalignment for a position of the operation such as catalyst replacement.

In addition, since the moving device 300 includes the lift foot 340 that functions as a lift, the cart module 310 can be separated from the tube sheet surface 3a, and the moving device 300 can be moved in the second direction.

In addition, in the moving device 300, the lift foot 340 serves as both the brake and the lift, so that the number of components can be reduced to further downsize the moving device 300.

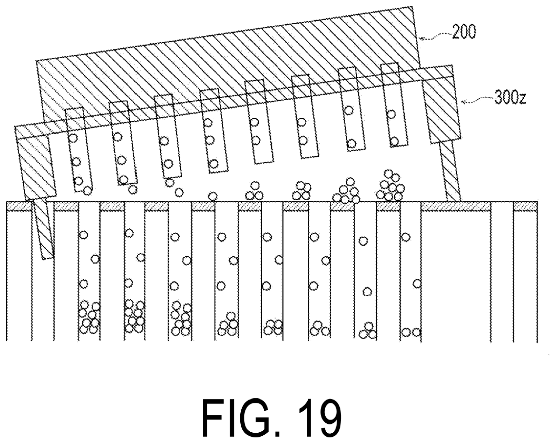

FIG. 19 is a view illustrating a case where a leg portion of a moving device 300z according to the comparative example not including the insertion member height adjustment mechanism abuts against the closing portion 5. As illustrated in FIG. 19, when the moving device 300z does not include the insertion member height adjustment mechanism, the moving device 300z cannot be maintained substantially horizontal, a large gap is formed between the filling nozzle or the like of the operation device 200 and the opening 4a of the reaction tube 4, the catalyst falls through the gap, and the operation such as catalyst replacement cannot be properly performed. On the other hand, since the moving device 300 includes the insertion member height adjustment mechanism, it is possible to prevent the moving device 300 from being inclined at the time of the retraction and insertion operation of the insertion member 323 from and into the opening 4a of the reaction tube 4. As a result, the operation such as catalyst replacement can be properly performed.

The insertion member 323 is formed in an elongated shape in the height direction, and is provided with the retaining portion 323q that can abut against the second extending portion 324D at an intermediate portion of the insertion member 323 in the height direction as an example. In the present embodiment, the retaining portion 323q is formed so as to protrude radially outward. Furthermore, the retaining portion 323q holds a lower end portion of the urging member 325 at the intermediate position in the height direction of the insertion member 323 (see FIG. 16). By providing the retaining portion 323q in this manner, it is possible to prevent the insertion member 323 from falling from the mounting member 324.

The urging member 325 is configured to be extendable and retractable so as to urge the insertion member 323 in the substantially vertical direction within a predetermined length range. The urging member 325 has elasticity, and urges the insertion member 323 downward by being retained with the retaining portion 323q of the insertion member 323. Along with that, when the insertion member 323 abuts against the closing portion, the insertion member 323 can be compressed so as to be movable upward. With such a configuration, as illustrated in FIG. 18, when one of the insertion members 323 is inserted into the reaction tube 4, and the other insertion member 323 abuts against the closing portion 5, the moving device 300 including the mounting member 324 can be maintained substantially horizontal.

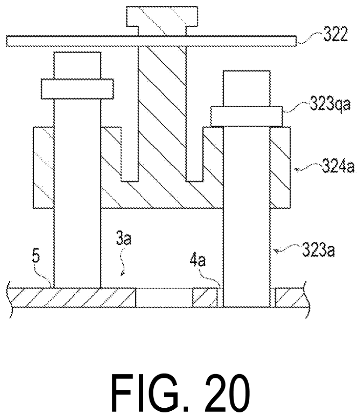

FIGS. 20 to 24 are views illustrating the insertion member insertion-retraction mechanism according to modifications. In these drawings, the pressing portion 324A of the mounting member 324 is omitted.

### Retaining portion modification 1

In the insertion member 323, the retaining portion 323q is provided at the intermediate position of the insertion member 323 as a configuration for aligning the heights of a plurality of insertion members before insertion into the opening 4a of the reaction tube 4, and defining an insertion limit to the reaction tube 4. However, as long as a downward movement limit position of the insertion member is defined when the insertion member is moved downward, a retaining portion 323qa of the mounting member 324a may be provided at a position near an upper end portion of the insertion member 323a as illustrated in FIG. 20.

### Retaining portion modification 2

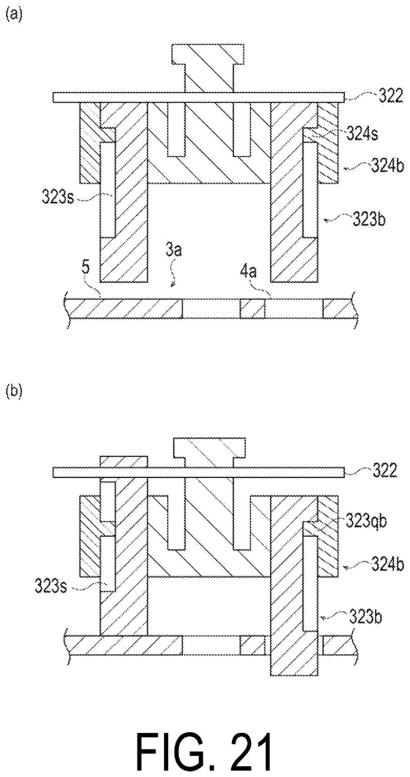

In FIG. 16 and the like, the retaining portion 323q is formed so as to protrude radially outward at the intermediate position of the insertion member 323; however, the specific shape of the retaining portion is not limited to the above shape. Other than the above, as illustrated in FIGS. 21(a) and 21(b), a groove 323s extending in a moving direction may be provided at any position in the circumferential direction of the insertion member 323b, and a protruding shape 324s or the like may be provided at a predetermined position of a mounting member 324b corresponding to the groove 323s of the insertion member 323b. As a result, an end portion 323qb of the groove 323s functions as a retaining portion, and the movement limit position of the insertion member can be provided.

### Retaining portion modification 3

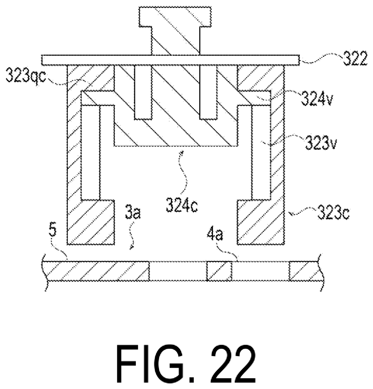

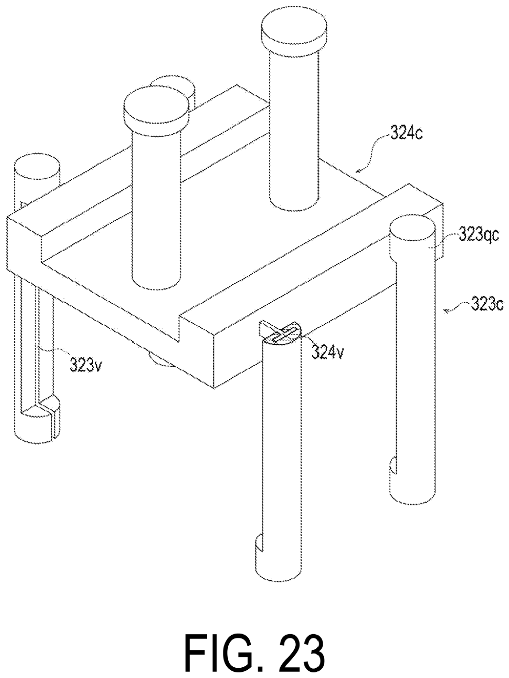

In FIG. 18 and the like, the mounting member 324 has a cylindrical shape as a guide shape through which the insertion member 323 can be inserted, for example. However, the specific shape of the mounting member is not limited to the cylindrical shape as long as the insertion member can be inserted into and retracted from the opening 4a of the reaction tube 4. Other than the above, as illustrated in FIGS. 22 and 23, a T-shaped engagement portion 324v extending in the moving direction may be provided on at least a part of an outer periphery of the mounting member 324c. An insertion member 323c may be provided with an engagement portion 323v that engages with the engagement portion 324v inside the cylindrical shape at a certain distance away from an upper end portion 323qc in the height direction. In FIG. 22, to illustrate the shape of the engagement portion 323v, the upper end portion 323qc of the insertion member 323c located at the lower right of the four insertion members 323c is not illustrated. The fixing member 322 is not illustrated, either. The movement limit position of the insertion member 323c can be set by causing the upper end portion 323qc, which is not provided with the engagement portion 323v, to function as a retaining portion.

### Retaining portion modification 4

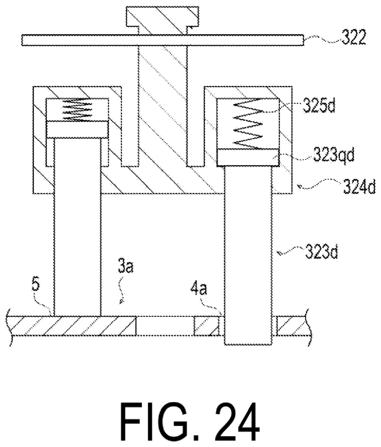

As illustrated in FIG. 18, the insertion member 323 is configured to be inserted through the urging member 325 at the intermediate position in the height direction, and to include the retaining portion 323q retained with the urging member 325; however, specific forms of the insertion member and the urging member are not limited thereto. Other than the above, as illustrated in FIG. 24, a mounting member 324d and an upper end portion 323qd of an insertion member 323d may be connected by an urging member 325d to urge the insertion member 323d in a direction substantially perpendicular to the tube sheet surface 3a. Although the urging member 325d is illustrated as a coil spring in FIG. 24, the urging member is not limited to the coil spring and may be configured by an air suspension and the like. In this example, the insertion member 323d is retained such that a part of the upper end portion 323qd of the insertion member 323d is supported from below by the mounting member 324d. It can also be said that the urging member 325d also serves as a retaining member, and the insertion member 323d is retained by the mounting member 324d via the urging member 325d.

The present invention is not limited to the above-described embodiment, and various modifications can be made within the scope of the claims. In the above description, the moving device 300 can wirelessly communicate with the input device 100 so as to operate according to the configuration of the control system such as the input device 100; however, the moving device 300 is not limited thereto. For example, the moving device 300 and the input device 100 may be connected by wire such that the moving device 300 can receive an instruction from the configuration of the control system.

In the above embodiment, the example in which the lift foot 340 serves both as the lifting mechanism and the fixing mechanism according to the invention of the present application has been described; however, the moving device 300 may include a lifting mechanism and a fixing mechanism separately. The fixing mechanism may include, for example, a pad that inhibits the movement of the rotary body 311. Alternatively, the fixing mechanism may include the plurality of insertion members 323 inserted into the reaction tubes 4.

The present application is based on Japanese Patent Application No. 2024-20641 filed on February 14, 2024, the disclosure of which is incorporated herein by reference in its entirety.

### Reference Signs List

1 Multi-tubular reactor
3 Tube sheet
3a Tube sheet surface
4 Reaction tube
4a Opening
300 Moving device
310 Cart module (movement propulsion unit, reaction tube changing mechanism)
320 First movement propulsion unit (movement propulsion unit, reaction tube changing mechanism)
330 Second movement propulsion unit (movement propulsion unit, reaction tube changing mechanism)
340 Lift foot (movement propulsion unit, reaction tube changing mechanism)
342 Grounding portion
350 Platform portion
322 Fixing member (insertion member insertion-retraction mechanism)
323, 323a, 323b, 323c, 323d Insertion member (insertion member insertion-retraction mechanism)
323q, 323qa Retaining portion
323qb End portion (retaining portion)
323qc, 323qd Upper end portion (retaining portion)
324 Mounting member (insertion member insertion-retraction mechanism, height adjustment mechanism)
325, 325d Urging member (insertion member insertion-retraction mechanism)

## Claims

1. A moving device that moves on a tube sheet of a multi-tubular reactor including a plurality of reaction tubes, the moving device comprising:
an insertion member insertion-retraction module configured to insert and retract a plurality of insertion members respectively into and from different reaction tubes;
a cart module including a rotary body that is in contact with the tube sheet and is movable in a first direction on the tube sheet; and
a first slide module connected to the cart module in such a manner that the cart module is slidable in the first direction,
wherein the insertion member insertion-retraction module is directly or indirectly connected to the cart module.

2. The moving device according to claim 1, wherein the insertion member insertion-retraction module is connected to the cart module via the first slide module.

3. The moving device according to claim 1, further comprising a lifting mechanism configured to separate the cart module from the tube sheet, and bring the cart module separated from the tube sheet into contact with the tube sheet.

4. The moving device according to claim 3, further comprising a fixing mechanism configured to fix a position of the cart module on the tube sheet.

5. The moving device according to claim 4, wherein the lifting mechanism and the fixing mechanism include a support member configured to be in contact with the tube sheet and support the cart module.

6. The moving device according to claim 3, further comprising a second slide module connected to the cart module in such a manner that the cart module separated from the tube sheet is slidable in a second direction on the tube sheet.

7. The moving device according to claim 6, wherein the lifting mechanism is directly or indirectly connected to the second slide module.

8. The moving device according to claim 4, further comprising a controller configured to control the insertion member insertion-retraction module and the first slide module,
wherein the controller causes the cart module to slide to a predetermined position in the first direction in a state where each of the plurality of insertion members is inserted into a corresponding one of the different reaction tubes.

9. The moving device according to claim 8, wherein the controller causes each of the insertion members to be retracted from a corresponding one of the different reaction tubes in a state where the cart module on the tube sheet is fixed at a predetermined position in the first direction by the fixing mechanism.

10. A movement method of a moving device that moves on a tube sheet of a multi-tubular reactor, the movement method comprising:
arranging a cart module at a first position in a first direction on the tube sheet, the cart module including a rotary body that is in contact with the tube sheet and is movable in the first direction;
inserting a plurality of insertion members directly or indirectly connected to the cart module respectively into different reaction tubes;
sliding the cart module from the first position to a second position in the first direction in a state where the plurality of insertion members are inserted into the different reaction tubes; and
retracting each of the plurality of insertion members from a corresponding one of the different reaction tubes after fixing the cart module at the second position by a fixing mechanism.
